# EUROPEAN PATENT SPECIFICATION

(11) **EP 1 651 517 B1**
(45) Date of publication and mention of the grant of the patent: **18.04.2007**
(21) Application number: 04786165.3
(22) Date of filing: 05.08.2004
(51) Int. Cl.: B64D 1/16

(54) **FIRE FIGHTING HELICOPTER**
BRANDBEKÄMPFUNGSHUBSCHRAUBER
HELICOPTERE DE LUTTE CONTRE L'INCENDIE

(30) Priority: 07.08.2003 GR 2003100339
(43) Date of publication of application: 03.05.2006
(73) Proprietor: Payassis, Roger, Limassol 3605 (CY)
(72) Inventor: Payassis, Roger, Limassol 3605 (CY)
(74) Representative: Antoniou, Tonia
(86) International application number: PCT/CY2004/000004
(87) International publication number: WO 2005/014394

(56) References cited:
- FR-A- 2 829 103
- GB-A- 2 133 688
- US-A- 3 897 829
- US-A- 4 090 567
- US-B1- 6 622 966

## Description

The present invention refers to a means of fire fighting and the confrontation of fires, particularly the fires in inaccessible areas, as in forests. More specifically it refers to an improved fire-fighting helicopter.

A serious problem, that fire fighting forces face, for the extinguishing of fire in a forest, is the lack of accessible roads. This causes delays in the intervention of fire fighting personnel and allows the fire to spread beyond its initial hearth; therefore its confrontation is worsened.

For the confrontation of the problem of lack of access to the fire front, flying means have been used, like planes and helicopters. The first, because of their construction, can only make a rapid passage above a hearth of fire and thus can only vacate certain and if possible a large, quantity of water in a specific point of the fire front. This is costly, as far as the water and time is concerned; as the plane should immediately return for supply and come back for a new drop in another point ahead, and so on. Furthermore, there are dangers for the personnel that work on the ground from the drops.

The helicopters that are used for fire fighting usually transport a large bucket full of water, which is hanging under the helicopter. During the operation, the captain selects the expedient point, immobilises the helicopter and vacates the bucket. This allows the more sensible management of water, as the point of drop can be selected with more accuracy and the aiming to be more precise.

Another notable problem is the problem of stability of flight. At the abrupt evacuation of water from the bucket, the centre of gravity of the plane is shifted instantaneously, because of the principle of maintenance of impetus, and therefore the abilities of handling by the pilot are required for the safe governing of the plane. Also, during manoeuvres, unanticipated shifts of centre of gravity of aquatic mass are observed that can set at risk the safety of flight and in order to be faced require particular abilities of the pilot.

GB-A-2 133 688 discloses a fire fighting helicopter according to the preamble of claim 1, wherein the launcher is located on the outer, lower surface of the helicopter.

FR-A-2 829 103 discloses a restriction plate running in guides and acting on the exterior of a flexible reservoir.

US-A- 4 090 567 discloses a launcher mounted at the rear of an upper deck of a helicopter fuselage.

US-A-3 897 829 discloses a launcher extending out of the rear portion of a helicopter fuselage.

The present invention resolves at least a few of the problems mentioned above, providing a fire fighting helicopter which allows the systematic and precise drop of fire fighting liquid where and when it is required.

The present invention also resolves the problem of instability of flight because of shifts of centre of gravity of fire fighting liquid.

Therefore, according to the present invention, a fire fighting helicopter is provided which includes in its fuselage reservoirs of fire fighting liquid, characterized by that it includes a launcher of fire fighting liquid under pressure in the front lower deck of fuselage for the controlled launch of fire fighting liquid. Also, a plate in the main reservoir tank of the fire fighting liquid is vertically moving between steady drivers so that it always maintains the quantity of fire fighting liquid inside the reservoir in steady state between solid walls and it avoids the movement of its centre of gravity.

According to a preferred realisation of invention, the front deck of the helicopter is divided vertically in two decks, the upper section constitutes the cockpit and the lower has sufficient space in order to accept an operator who handles the nozzle fire fighting liquid.

Preferably, according to the invention, the extra plate in the main reservoir of fire fighting liquid is shifted vertically with the help of two vertical worm screws run from an electric motor.

The invention will be described more in detail below with reference to the attached drawings, in which:
Drawing 1 is a schematic side view section of a fire-fighting helicopter according to the invention.
Drawing 2 is a side view (section) of the main reservoir of fire fighting liquid of helicopter according to the present invention

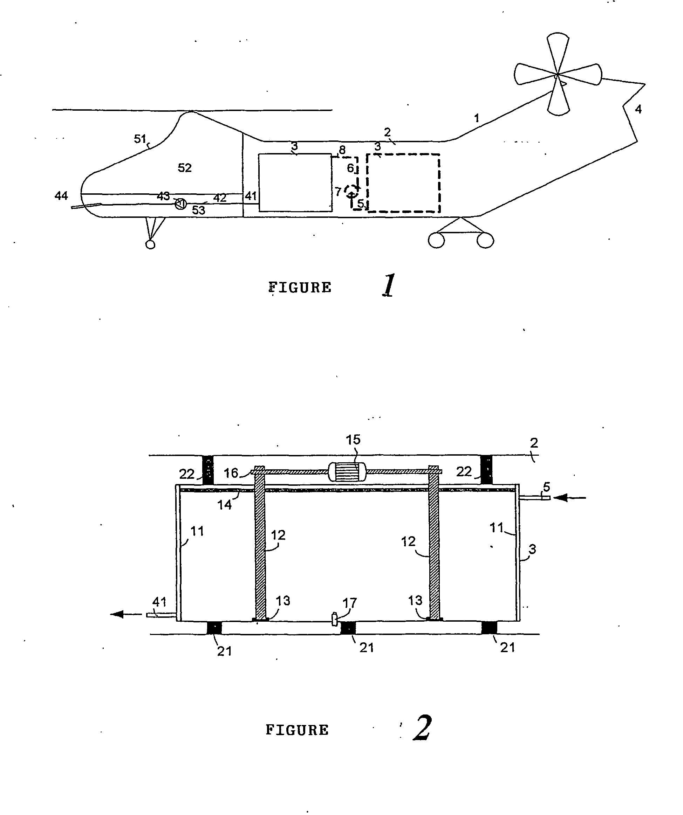

In drawing 1 there is a helicopter 1 of a type that can be used for the application of the present invention. The fuselage 2 of helicopter 1 is shaped in such a way that it accepts one or two parallelepiped reservoirs 3 for accepting fire fighting liquid, depending on the size and power of the helicopter. At the rear end of the helicopter there is loading access 4 which allows the loading and the unloading of reservoir (or the reservoirs) of fire fighting liquid when the helicopter is preparing for the operation.

The main reservoir 3, which will be described in more detail below, has a general form of a parallelepiped rectangle and it is supported on the flooring of the fuselage of the helicopter via six pads 21 (drawing 2) placed in the four edge base of the main reservoir and in the middle of two across edges. Also, for the complete immobilisation of the main reservoir, four wedges 22 (drawing 2) which are placed between the roof of reservoir 3 and the fuselage 2, in the four corners of the surface of the roof of reservoir 3.

If a second reservoir is also used, this has a similar form with the main reservoir, it is placed behind this, with reference to the line of movement of the helicopter, and it is placed and immobilised with the same way as the main reservoir. In a place of the front side of the second reservoir, near the bottom of the reservoir, there is a departing exit of liquid 5 closing with an interrupting valve. When the second reservoir is placed and immobilised inside the helicopter, departing exit 5 is connected via a flexible pipe 6, and with the interjection of pump 7, with a stand-by entry of liquid 8, which is forecasted in a place in the rear side of the main reservoir, near the roof of the main reservoir.

As already mentioned, and as it appears in drawing 2, the main reservoir 3 has the form of a rectangle parallelepiped. In the interior, and near the four vertical edges, four vertical linear sliding guides 11 are forecasted. In the across level of symmetry of the main reservoir and symmetrically placed for the traverse level of symmetry two worm screws 12 are placed. These screws 12 are supported in rotation position 13 in the flooring of reservoir. The worm screws 12 penetrate the roof of the reservoir 3 via waterproof rotation positions and terminate in small height above the roof of the main reservoir 3.

Also in the internal main reservoir 3, and parallel to the roof and its flooring, a metal plate of restriction 14 with dimensions equal to the internal dimensions of the ground plan of the main reservoir, is forecasted. The plate of restriction 14 slides freely with the help of suitable means inside the four linear guides of slipping 11, while perimetrically its tolerances concerning the adjacent surfaces of the reservoir are minimally possible, so that it ensures the leak-tightness between its upper and lower side of the restriction plate.

In the across axis of the metal plate of restriction 14 and in places that correspond to those of worm screws 12, two holes are opened up. The holes have an internal coil that corresponds to the level, the geometric form and dimensions of those of the worm screws 12, so that they collaborate with them.

On the roof of the reservoir and around its centre an electric motor 15 is installed, whose rotating rods 16 are horizontal and stick out both sides from the two ends of the motor 15 and ends in screws collaborating with their worm screws 12 in such a way that they turn the rotating movement around the horizontal axis into a rotating movement around the vertical axis and with the direction of the worm screws 12. This rotating movement of worm screws 12 is changed into a straight movement of slipping, rise or fall depending on the direction of rotation of worm screws 12, plate 14 along the sliding guides 11, via the coil holes of the plate of restriction 14. Also on the roof of reservoir 3, in the preferred position there is a box of inspection. Finally, in a suitable point of the bottom of the main reservoir of 3, a sensor switch 17 of any suitable type is placed.

In the front side and near the bottom of the main reservoir there is a nozzle for the exit of fire fighting liquid 41. This is connected via a flexible pipe 42 and with the interjection of a high pressure pump 43 with a launcher nozzle of high pressure 44 placed in the front lower deck of the helicopter, as it appears in picture 1. Launcher 44 is assembled with freedom of movement so that it can be directed manually on the desirable target and is regulated in such a way that the water can be ejected or sprayed concentrated.

The front department 51 of the helicopter is divided with a horizontal flooring in an upper and lower deck. Upper deck 52 is occupied by a classical helicopter cockpit. This helicopter cockpit is known in the trade and will not be described in more detail here.

The lower deck 53, includes the launcher of fire fighting liquid 44, is of small height and it has such dimensions that it can accept an individual in a lying position. This deck constitutes the handling position of the launcher. It communicates with the upper deck via a trapdoor, by which the operator can descend and occupy the handling position of the launcher. The front half of the lower deck is transparent in order to allow the operator to observe the ground of the fire, and select the target and direct the launcher.

The lower deck also contains a handling board with switches to operate the plate 14, via an electric motor 15 and limit switch 17. This handling board is suitably placed so that it can be used easily by the operator of the launcher and can include, for example:
a) a control of the descend of the plate
b) a control of immobilisation of the motor
c) a control of the rise of the plate
d) a control of cancellation of the operation of controls a) to c) and transfer of control of rise-fall of plate 14 on limit switch 17.

During the preparation of the helicopter for a venture, the electric motor of shift of plate of restriction is placed in operation so that it raises the plate of restriction in its upper place, almost in contact with the roof of the main reservoir. In this way, the waiting entry of the main reservoir is placed in operation with the interior of the main reservoir and it allows its filling with fire fighting liquid, via the second reservoir and the pump, if they are forecasted (if a second tank exists).

During the extinguishing of the fire, the operator uses launcher 44 for the launch of fire fighting liquid in the suitable places and quantities, contrary to the usual practice of dropping of big quantities in one only point. While the fire fighting liquid is consumed and as the level inside the main reservoir descends, the electric motor of main reservoir is placed once again in operation affecting the descent of the plate of restriction, so that the free surface of fire fighting liquid is always in contact with the lower side of the plate of restriction. In this way, movements of the free surface during manoeuvres of the helicopter is restricted and therefore shifts of the centre of gravity that can cause instability of the flight are avoided. When the plate of restriction approaches the bottom of the reservoir, the limit switch is activated and it deactivates the operation the electric motor.

The invention was described above according to a preferred way of realisation. It is however obvious that the experts of the profession can use various changes in the particular used technical means or replace them with other equivalent ones. All these changes and modifications are covered by the invention, which is limited only by the frame of the attached claims.

## Claims

1. A fire fighting helicopter comprising in the fuselage (2) reservoirs of fire fighting liquid (3) for the extinguishing of fire, and a launcher for controlling the quantity of the fire fighting liquid (44) under pressure **characterized by** the fact that the launcher is located in the front of a lower deck and a restriction plate (14) in a main reservoir of fire fighting liquid (3) is vertically mobile between stable guides (11) so that it always restricts the quantity of fire fighting liquid stable between solid walls inside the reservoir (3) avoiding in this way the movement of its centre of gravity.

2. A fire fighting helicopter according to claim 1, **characterized by** the front section of the fuselage of helicopter which is vertically divided in two decks (52, 53), from which the upper (52) constitutes the cockpit and the lower (53) which has sufficient space in order for it to receive in lying position an operator who operates the launcher (44) of the fire fighting liquid, and also controls the direction of the said launcher (44).

3. A fire fighting helicopter according to claim 1 or 2, is **characterized by** that the restriction plate (14) of the main reservoir of the fire fighting liquid (3) is shifted vertically with the help of two vertical, worm screws (12) operated by an electric motor (15).

## Patentansprüche

1. Ein Feuerlöschhubschrauber, der in den Rumpfbehältern (2) Löschflüssigkeit enthält (3), um das Feuer zu löschen, und ein Startkatapult, um die Menge der unter Druck gesetzten Löschflüssigkeit zu kontrollieren (44). Wichtig dabei ist, dass das Startkatapult sich vor einer unteren Trägfläche und einer Schwallwand (14) in einem mit Löschflüssigkeit gefüllten Hauptbehälter (3) zwischen höhenverstellbaren, stabilen, Führungen (11) befindet, so dass die Menge der Löschtlüssigkeit immer stabil zwischen den soliden Seitenwänden des Behälters eingeschränkt werden kann, um auf diese Weise die Verschiebung dessen Schwerpunkt zu vermeiden.

2. Bei einem Feuerlöschhubschrauber, gemäß Anspruch 1 ist der vordere Teil des Hubschrauberrumpfs, der horizontal in zwei Trägflächen (52, 53) geteilt. Davon bidet die oberste Tragfläche (52) das Cockpit und die untere (53) verfügt über genügend Raum, um einen Betreiber in waagerechter Position unterzubringen, damit er den Startkatapult der Löschflüssigkeit (44) bedienen sowie die Richtung des Startkatapults (44) kontrollieren kann.

3. Ein Feuerlöschhubschrauber, gemäß Anspruch 1 und 2, ist durch die Tatsache **gekennzeichnet**, dass die Schwallwand des mit Löschflüssigkeit (3) gefüllten Hauptbehälters mit Hilfe von zwei senkrechten, von einem elektrischen Motor (15) betriebenen Packungsziehern (12), senkrecht umgestellt werden kann.

## Revendications

1. Un hélicoptère de pompiers, équipé dans son caisson de fuselage (2) des réservoirs de liquide extincteur d'incendie, (3) pour l'extinction d'incendies, et d'un lanceur sous pression pour contrôler la quantité du liquide extincteur d'incendie (44), qualifié du fait que le lanceur est situé devant le pont inférieur. L'hélicoptère est aussi équipé d'une plaque (14) située dans le principal réservoir de liquide extincteur d'incendie (3) qui est verticalement mobile entre les lignes guides stables (11), de façon à limiter constamment et fermement la quantité du liquide extincteur d'incendie entre les parois solides à l'intérieur du réservoir (3), en évitant ainsi tout mouvement en provenance du centre de gravité.

2. Un hélicoptère de pompiers en conformité de la première revendication, marquée par sa section du fuselage de devant, qui est verticalement divisée en deux ponts (52, 53), desquels le pont supérieur (52) constitue le habitacle et le pont inférieur (53), qui dispose de suffisamment d'espace en soi pour recevoir un opérateur allongé qui puisse manoeuvrer le lanceur (44) du liquide extincteur d'incendie et aussi contrôler la direction du dit lanceur (44).

3. Un hélicoptère de pompiers en conformité des deux précédentes revendications, est qualifié par le fait que la plaque (14) du principal réservoir de liquide extincteur d'incendie (3) est décalé verticalement avec l'aide de deux vis sans fin verticaux (12) activés par un moteur électrique (15).
